## Europäisches Patentamt

## European Patent Office

## Office européen des brevets

(11) Veröffentlichungsnummer: **0 093 204**
**B1**

(12) **EUROPÄISCHE PATENTSCHRIFT**

(45) Veröffentlichungstag der Patentschrift:
21.08.85

(51) Int. Cl.⁴: **C 05 D 9/02**

(21) Anmeldenummer: **82200510.4**

(22) Anmeldetag: **29.04.82**

(54) Verfahren zum Granulieren von Eisen-(II)-sulfat enthaltenden Düngergemischen.

(43) Veröffentlichungstag der Anmeldung:
09.11.83 Patentblatt 83/45

(45) Bekanntmachung des Hinweises auf die Patenterteilung:
21.08.85 Patentblatt 85/34

(84) Benannte Vertragsstaaten:
**AT BE CH DE FR GB IT LI LU NL SE**

(56) Entgegenhaltungen:
**DE - C - 901 058
FR - A - 2 030 447
NL - A - 271 782
NL - A - 279 606
US - A - 2 806 773
US - A - 3 436 204
US - A - 3 491 086
US - A - 3 567 460**

(73) Patentinhaber: **NORDDEUTSCHE AFFINERIE AG,
Alsterterrasse 2, D-2000 Hamburg 36 (DE)**

(72) Erfinder: **Ploss, Hartmut, Dr., Sierichstrasse 88,
D-2000 Hamburg 60 (DE)**
Erfinder: **Ingwersen, Walter, Finkenweg 28,
D-3043 Schneverdingen (DE)**

(74) Vertreter: **Fischer, Ernst, Dr., Reuterweg 14,
D-6000 Frankfurt am Main 1 (DE)**

BUNDESDRUCKEREI BERLIN

## Beschreibung

Die Erfindung betrifft ein Verfahren zum Granulieren von Düngergemischen, die Eisen-(II)-sulfat und düngewirksame Substanzen enthalten, unter Zugabe von Granulierfeuchtigkeit.

Eisen-(II)-sulfat, das als eines der ältesten Herbizide bekannt ist, findet speziell als Moosbekämpfungsmittel eine breite Anwendung, häufig in Kombination mit Herbiziden und Düngemitteln.

So ist es beispielsweise aus der DE-Offenlegungsschrift 2 150 910 bekannt, Mischungen aus Eisen-(II)-sulfat, Kalziumcarbonat, Ammonnitrat und ggf. Ammonsulfat z. B. in einer rotierenden Trommel oder in einem Rohrgranulator zu granulieren. Die Granuliertemperatur sollte dabei etwa 60—85° C betragen.

Bei dem Verfahren gemäß DE-Offenlegungsschrift 1 931 289 werden ein oder mehrere anorganische Eisensalze mit einem Harnstoff-Formaldehyd-Kondensat unter Bildung eines Mikronährstoffdüngemittels vermischt und ggf. granuliert.

Es hat sich jedoch gezeigt, daß es — zumindest im großtechnischen Maßstab — nicht gelang, Eisen-(II)-sulfat — das handelsüblich 7 Mol Kristallwasser enthält — zusammen mit Düngersalzen, wie z. B. Ammonsulfat, zu granulieren. Die beim Granulieren notwendige Zuführung von Wasser führt infolge der sehr hohen Hydroskopität zum Zerfließen des Eisen-(II)-sulfates, was eine Granulatbildung verhindert.

In Verbindung mit Ammonsulfat, das wegen der schnellen Düngeranfangswirkung besonders vorteilhaft wirkt, entsteht das Ferroammonsulfat, das sogenannte Mohrsche Salz, das die Herbizid- und Düngerwirkung vermindert.

Setzt man beim Granulierprozeß als Ausgangsprodukt das pulverförmige und nicht hygroskopische Eisen-(II)-sulfatmonohydrat ein, so wird das beim Granulieren zugefügte Wasser als Kristallwasser gebunden und es entsteht das Heptahydrat, das zu den oben erwähnten Schwierigkeiten führt.

Aufgabe der Erfindung ist es, ein Verfahren zum Granulieren von Eisen-(II)-sulfat enthaltenden Düngegemischen bereitzustellen, das die bekannten, insbesondere vorgenannten Nachteile nicht aufweist, einfach in der Durchführung ist und auch unter Berücksichtigung wirtschaftlicher Gesichtspunkte zu guten Ergebnissen führt.

Die Aufgabe wird gelöst, indem das Verfahren der eingangs genannten Art entsprechend der Erfindung derart ausgestaltet wird, daß man den Granuliervorgang mit einer Mischung durchführt, die Eisen-(II)-sulfat mit im Mittel 1 bis 4 Mol Kristallwasser sowie zusätzlich eine hydrophile, die Aufnahme der Granulierfeuchtigkeit durch das Eisen-(II)-sulfat verzögernde Substanz enthält.

Durch die Erfindung wird bewirkt, daß die Aufnahme des zum Granulieren benötigten Wassers als Kristallwasser durch die Zugabe bestimmter hydrophiler, wasseranziehender Substanzen so verzögert wird, daß der Granulierprozeß abgeschlossen ist, bevor das Wasser endgültig als Kristallwasser gebunden wird. Das so hergestellte Granulat ist feuchtigkeitsunempfindlich und die Herbizid- wie auch die Düngerwirkung bleibt voll erhalten. Als hydrophile, wasseranziehende Substanzen können alle chemischen Produkte verwendet werden, deren Wasseraufnahmegeschwindigkeit höher liegt als die Hydratwasseraufnahme des Eisen-(II)-sulfats mit 1 bis 4 Mol Kristallwasser und die selber kein Hydrat bilden. Besonders geeignete hydrophile Substanzen sind insbesondere Salze der Ligninsulfonsäure, wie beispielsweise Calcium-, Natrium-, Kalium- oder Ammoniumsalz, Tenside vom Typ des Natriumoctan-l-sulfonat, Natriumoctylsulfat, Natriumdodecylbenzolsulfat, Natriumlauryläthersulfat sowie oxäthyliertes Glycerinmonostearat oder Fettalkoholpolyglykoläther. Fernerhin sind geeignet Saccharide, Stärken und Dextrine sowie Kieselsäuren und Kieselgur. Eine bevorzugte Ausführungsform der Erfindung sieht vor, den Granuliervorgang mit einer Mischung durchzuführen, die die hydrophile Substanz in einer Menge von 0,5 bis 10,0 Gew.-% enthält.

Eine weitere vorteilhafte Ausgestaltung der Erfindung liegt darin, die herbizid wirkende Komponente Eisen-(II)-sulfat mit im Mittel 1 bis 4 Mol Kristallwasser mit einem Anteil von 10 bis 80 Gew.-%, vorzugsweise 40 bis 60 Gew.-%, in der zu granulierenden Mischung einzusetzen.

Besonders vorteilhaft ist es, die Feuchtigkeitszugabe beim Granulierprozeß derart zu bemessen, daß sie zur Bildung eines Eisen-(II)-sulfates mit im Mittel maximal 5 Mol Kristallwasser führt.

Die optimale Ausführungsform der Erfindung besteht darin, den Granuliervorgang mit im Mittel ca. 1 Mol Kristallwasser enthaltendem Eisen-(II)-sulfat durchzuführen und die Feuchtigkeitszugabe derart zu bemessen, daß sie zur Bildung eines Eisen-(II)-sulfates mit im Mittel ca. 2,5 Mol Kristallwasser führt.

Als düngewirksame Substanzen können der zu granulierenden Mischung zweckmäßigerweise Ammonsulfat, feste Stickstoff-, Phosphor- und Kalidünger, Mikronährstoffdünger, Depotdünger und natürliche Dünger zugegeben werden. Die düngewirksamen Substanzen werden dabei in Mengen zugesetzt, die der Nährstoffaufnahme der jeweiligen Kulturpflanzen entsprechen.

Die Erfindung wird durch das folgende Beispiel beispielsweise und näher erläutert.

### Beispiel

27,6 Gew.-Teile Ammonsulfat, 5 Gew.-Teile Harnstoff und 55,6 Gew.-Teile Eisen-(II)-sulfatmonohydrat wurden mit 3 Gew.-Teilen Calcium-Ligninsulfonat (Zellpech) vermischt und in einem Granulator unter Zuführung von 8,8 Gew.-Teilen Wasser bei Umgebungstemperatur granuliert. Es entstand ein Granulat mit einer mittleren Teilchengröße von 1 bis 3 mm. Das Produkt bedurfte keiner Nachtrocknung, sondern konnte unverzüglich abgepackt werden.

## Patentansprüche

1. Verfahren zum Granulieren von Düngergemischen, die Eisen-(II)-sulfat und düngewirksame Substanzen enthalten, unter Zugabe von Granulierfeuchtigkeit, dadurch gekennzeichnet, daß man den Granuliervorgang mit einer Mischung durchführt, die Eisen-(II)-sulfat mit im Mittel 1 bis 4 Mol Kristallwasser sowie zusätzlich eine hydrophile, die Aufnahme der Granulierfeuchtigkeit durch das Eisen-(II)-sulfat verzögernde Substanz enthält.

2. Verfahren nach Anspruch 1, dadurch gekennzeichnet, daß man den Granuliervorgang mit einer Mischung durchführt, die als hydrophile Substanz Salz einer Ligninsulfonsäure, Tenside, Saccharide, Stärken, Dextrine, Kieselsäuren und/oder Kieselgur enthält.

3. Verfahren nach Anspruch 1 oder 2, dadurch gekennzeichnet, daß man den Granuliervorgang mit einer Mischung durchführt, die die hydrophile Substanz in einer Menge von 0,5 bis 10 Gew.-% enthält.

4. Verfahren nach Anspruch 1, 2 oder 3, dadurch gekennzeichnet, daß die zu granulierende Mischung Eisen-(II)-sulfat in Mengen von 10 bis 80, vorzugsweise 40 bis 60, Gew.-% enthält.

5. Verfahren nach einem oder mehreren der Ansprüche 1 bis 4, dadurch gekennzeichnet, daß man die Feuchtigkeitszugabe derart bemißt, daß sie zur Bildung eines Eisen-(II)-sulfats mit im Mittel maximal 5 Mol Kristallwasser führt.

6. Verfahren nach einem oder mehreren der Ansprüche 1 bis 5, dadurch gekennzeichnet, daß man den Granuliervorgang mit einer Eisen-(II)-sulfat mit im Mittel ca. 1 Mol Kristallwasser enthaltenden Mischung durchführt und die Feuchtigkeitszugabe derart bemißt, daß sie zur Bildung eines Eisen-(II)-sulfats mit im Mittel ca. 2,5 Mol Kristallwasser führt.

7. Verfahren nach einem oder mehreren der Ansprüche 1 bis 6, dadurch gekennzeichnet, daß man der zu granulierenden Mischung als düngewirksame Substanzen Ammonsulfat, feste Stickstoff-, Phosphor- und Kalidünger, Mikronährstoffdünger, Depotdünger und/oder natürliche Dünger zugibt.

## Claims

1. A process of granulating fertilizer mixtures containing ferrous sulphate and fertilizing substances, wherein moisture for granulating is added, characterized in that a mixture is granulated which contains ferrous sulphate naving an average water of crystallization content of 1 to 4 moles and also contains a hydrophilic substance which retards the absorption of the moisture for granulating by the ferrous sulphate.

2. A process according to claim 1, characterized in that a mixture is granulated which contains a hydrophilic substance consisting of a salt of a ligninsulphonic acid, tensides, saccharides, starches, dextrins, silicic acids and/or kieselguhr.

3. A process according to claim 1 or 2, characterized in that a mixture is granulated which contains the hydrophilic substance in a quantity of 0.5 to 10 wt.%.

4. A process according to claim 1, 2 or 3, characterized in that the mixture to be granulated contains ferrous sulphate in a quantity of 10 to 80 wt.%, preferably 40 to 60 wt.%.

5. A process according to any of claims 1 to 4, characterized in that moisture is added in such a quantity that a ferrous sulphate having an average maximum content of 5 moles of water of crystallization is formed.

6. A process according to any of claims 1 to 5, characterized in that a mixture is granulated which contains ferrous sulphate having an average water of crystallization content of about 1 mole and moisture is added in such a quantity that ferrous sulphate is formed having an average water of crystallization content of about 2.5 moles.

7. A process according to any of claims 1 to 6, characterized in that fertilizing substances consisting of ammonium sulphate, solid nitrogen, phosphorus and potash fertilizers, micronutrient fertilizers, slow release fertilizers and/or natural fertilizers are added to the mixture to be granulated.

## Revendications

1. Procédé de granulation de mélanges d'engrais, qui contiennent du sulfate de fer (II) et des substances actives en tant qu'engrais, par addition d'humidité de granulation, caractérisé en ce qu'il consiste à effectuer le processus de granulation avec un mélange qui contient le sulfate de fer (II) ayant en moyenne de 1 à 4 moles d'eau de cristallisation, ainsi qu'en plus une substance hydrophile retardant l'absorption de l'humidité de granulation par le sulfate de fer (II).

2. Procédé suivant la revendication 1, caractérisé en ce qu'il consiste à effectuer le processus de granulation avec un mélange qui contient, comme substance hydrophile, un sel d'un acide lignosulfonique, un agent tensioactif, un saccharide, un amidon, une dextrine, un acide silicique et/ou de la terre de diatomée.

3. Procédé suivant la revendication 1 ou 2, caractérisé en ce qu'il consiste à effectuer le processus de granulation avec un mélange qui contient la substance hydrophile en une quantité de 0,5 à 10% en poids.

4. Procédé suivant la revendication 1, 2 ou 3, caractérisé en ce que le mélange à granuler contient du sulfate de fer (II) en des quantités de 10 à 80 et, de préférence, de 40 à 60% en poids.

5. Procédé suivant l'une ou plusieurs des revendications 1 à 4, caractérisé en ce qu'il consiste à mesurer l'addition d'humidité de manière à former un sulfate de fer (II) ayant en moyenne 5 moles d'eau de cristallisation au maximum.

6. Procédé suivant l'une ou plusieurs des revendications 1 à 5, caractérisé en ce qu'il consiste à effectuer le processus de granulation avec un mélange contenant du sulfate de fer (II) ayant en moyenne 1 mole environ d'eau de cristallisation et à mesurer l'addition d'humidité de manière à former un sulfate de fer (II) ayant en moyenne 2,5 moles d'eau de cristallisation environ.

7. Procédé suivant l'une ou plusieurs des revendications 1 à 6, caractérisé en ce qu'il consiste à ajouter au mélange à granuler, à titre de substance active en tant qu'engrais, du sulfate d'ammonium, des engrais solides azotés, phosphorés et potassiques, des engrais micronisés à substance nutritive, des engrais provenant de dépôts et/ou des engrais naturels.